(19)

Europäisches
Patentamt
European
Patent Office
Office européen
des brevets

(11) **EP 1 935 509 A1**

(12) **EUROPEAN PATENT APPLICATION**

(43) Date of publication:
**25.06.2008 Bulletin 2008/26**

(51) Int Cl.:
*B05D 5/08* (2006.01)    *B05D 3/12* (2006.01)
*F28F 13/18* (2006.01)

(21) Application number: **07122213.7**

(22) Date of filing: **04.12.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **19.12.2006 US 612516**

(71) Applicant: **General Electric Company
Schenectady, NY 12345 (US)**

(72) Inventors:
• **Bhate, Nitin
  Rexford, NY 12148 (US)**
• **Pareek, Vinod Kumar
  Albany, NY 12205 (US)**
• **Varanasi, Kripa Kiran
  Clifton Park, NY 12065 (US)**

(74) Representative: **Szary, Anne Catherine
London Patent Operation
General Electric International, Inc.
15 John Adam Street
London WC2N 6LU (GB)**

(54)    **Articles having antifouling surfaces and methods for making**

(57)    The article (10) comprising an antifouling surface (12) is provided. The surface (12) comprises a material having a nominal liquid wettability sufficient to generate, with reference to an oil, a nominal contact angle of at least about 30 degrees; and a texture comprising a plurality of features (16) disposed on the surface. The features (16) have a size, shape, and orientation selected such that the surface (12) has an effective wettability sufficient to generate, with reference to an oil, an effective contact angle greater than the nominal contact angle. The features (16) comprise a height dimension (20) (h), a width dimension (22) (a), a spacing dimension (b) such that, ratio b/a is less than about 4, and ratio h/a is less than about 10. In one embodiment, a turbine component comprising an antifouling surface (12) is provided.

EP 1 935 509 A1

**Description**

BACKGROUND

This invention relates to surfaces having antifouling properties. More particularly, this invention relates to surfaces incorporating a texture designed to provide resistance to water and oil. This invention also relates to articles comprising such surfaces, and methods for making such articles and surfaces.

Many machinery components, for example turbomachinery components, get fouled during operation due to oil, water, particulates and other fouling agents. The fouling may result in degradation in the machine efficiency as well as crevice corrosion, leading to lower life. Where fouling occurs on compressor blades in power generation equipment, utilities often use off-line washes to remove fouling substances, which may result in significant down-time. Antifouling coatings are conventionally used to mitigate such problems. Much of the work devoted to making antifouling surfaces has depended on the use of hydrophobic, often polymeric, coatings. These coatings, though effective, are often limited in practical application by low wear resistance, temperature capabilities, and low life span.

Therefore, there is a need to provide articles with durable surfaces having antifouling properties. Moreover, there is a need for methods for making such surfaces and articles having antifouling surfaces.

BRIEF DESCRIPTION

Embodiments of the present invention meet these and other needs by providing an article having antifouling properties. For example, one embodiment is an article. The article comprises a surface. The surface comprises a material having a nominal liquid wettability sufficient to generate, with reference to an oil, a nominal contact angle of at least about 30 degrees; and a texture comprising a plurality of features disposed on the surface. The features have a size, shape, and orientation selected such that the surface has an effective wettability sufficient to generate, with reference to an oil, an effective contact angle greater than the nominal contact angle. The features comprise a height dimension (h), a width dimension (a), a spacing dimension (b) such that, ratio b/a is less than about 4, and ratio h/a is less than about 10.

Another aspect of the invention is to provide a turbine component. The turbine component comprises a surface. The surface comprises a material having a nominal liquid wettability sufficient to generate, with reference to an oil, a nominal contact angle of at least about 30 degrees; and a texture comprising a plurality of features disposed on the surface. The features have a size, shape, and orientation selected such that the surface has an effective wettability sufficient to generate, with reference to an oil, an effective contact angle greater than the nominal contact angle. The features comprise a height dimension (h), a width dimension (a), a spacing dimension (b) such that; ratio b/a is less than 4, ratio h/a is less than about 10; and an average roughness less than about 1.6 micrometers.

Yet another aspect of the invention is to provide a method to render the surface of an article antifouling. The method comprises: providing an article comprising a substrate; disposing a plurality of features on the substrate to form a surface, such that fouling of the surface is reduced. The substrate comprises a material having a nominal liquid wettability sufficient to generate, with reference to an oil, a nominal contact angle. The features have a size, shape, and orientation selected such that the surface has an effective wettability sufficient to generate, with reference to an oil, an effective contact angle of greater than the nominal contact angle. The features comprise a height dimension (h), a width dimension (a), a spacing dimension (b) such that ratio b/a is less than 4, ratio h/a is less than about 10; and an average roughness less than about 1.6 micrometers.

These and other aspects, advantages, and salient features of the present invention will become apparent from the following detailed description, accompanying drawings, and appended claims.

BRIEF DESCRIPTION OF THE DRAWINGS

FIGURE 1 is a schematic cross-sectional view of a surface of an article showing the texture, according to one embodiment of the invention;

FIGURE 2 is a schematic representation of a fluid disposed on a nominally flat surface;

FIGURE 3 is a cross-sectional representation of an airfoil of a turbine, according to one embodiment of the invention;

FIGURE 4 shows photographs of a oil droplet on silicon posts with different b/a ratios;

FIGURE 5 is roll-off droplet radius as a function of b/a for silicon post structures;

FIGURE 6 is roll-off droplet radius as a function of b/a for silicon pore structures; and

FIGURE 7 is a plot of post sizes for impact resistant textures as a function of b/a.

DETAILED DESCRIPTION

In the following description, like reference characters designate like or corresponding parts throughout the several views shown in the figures. It is also understood that terms such as "top," "bottom," "outward," "inward," and the like are words of convenience and are not to be construed as limiting terms. Furthermore, whenever a particular feature of the invention is said to comprise or consist of at least one of a number of elements of a group and combinations thereof, it is understood that the feature may comprise or consist of any of the elements of the group, either individually or in combination with any of the other elements of that group.

As used herein, the "contact angle" or "static contact angle" is the angle formed between a stationary drop of a reference liquid and a horizontal surface upon which the droplet is disposed, as measured at the liquid/substrate interface. Contact angle is used as a measure of the wettability of the surface. If the liquid spreads completely on the surface and forms a film, the contact angle is 0 degrees. As the contact angle increases, the wettability decreases. An "antifouling surface" is meant to describe a surface that has a substantially reduced tendency for the attachment of fouling agents such as oil, water, dirt particulates, grease, or other foreign materials on the surface.

They are characterized by reduced build-up and more facile removal of fouling agents on the surface, compared to surfaces without the disclosed treatment.

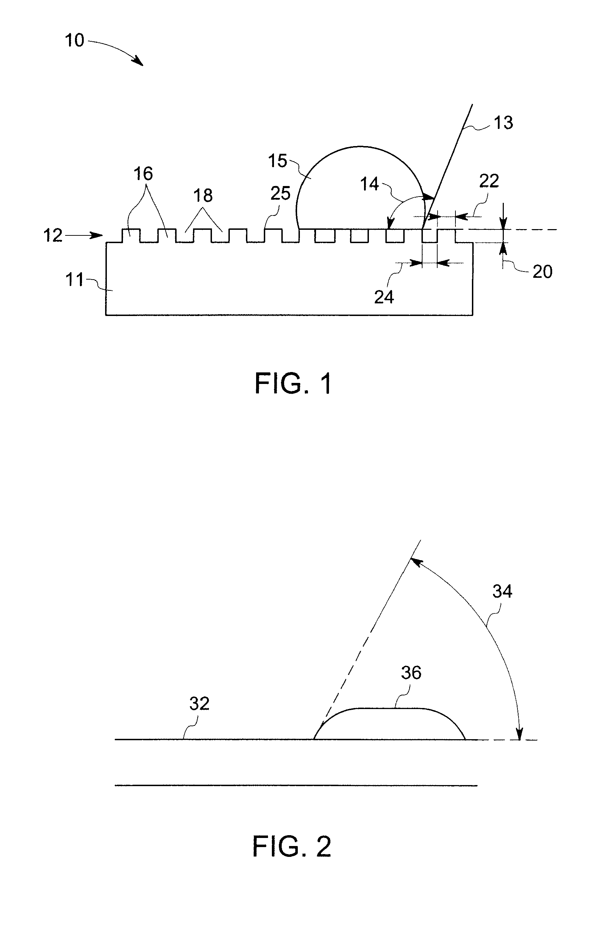

Referring to the drawings in general and to Figure 1 in particular, it will be understood that the illustrations are for the purpose of describing a particular embodiment of the invention, and are not intended to limit the invention thereto. Figure 1 is a schematic cross-sectional view of a surface of an article according to one embodiment of the invention. Article 10 comprises a surface 12. As used herein, the term "surface" refers to that portion of the article 10 that is in direct contact with an ambient environment surrounding the article 10. The surface may include the substrate, the features, or the surface modification layer disposed over the substrate, depending on the specific configuration of the article. Surface 12 has a low liquid wettability. One commonly accepted measure of the liquid wettability of a surface 12 is the value of the static contact angle 14 formed between surface 12, and a tangent 13 to a surface of a droplet 15 of a reference liquid at the point of contact between surface 12 and droplet 15. High values of contact angle 14 indicate a low wettability for the reference liquid on surface 12. The reference liquid may be any liquid of interest. In certain applications, the reference liquid is water. In other applications, the reference liquid is a liquid that contains at least one hydrocarbon. In a particular embodiment, reference liquid is an oil. As used herein, "oil" is to be understood as having its common meaning to cover a wide variety of unctuous substances not miscible with water. Examples include oils of animal, vegetable, or mineral origin, as well as synthetic oils. Particular examples of oils include petroleum-based products, such as crude oil and products distilled therefrom, such as kerosene, gasoline, paraffin, and the like. In some embodiments, the oil comprises an industrial lubricant such as bearing oil or light turbine oil. As used herein, the term "oil resistant" will be understood to refer to a surface that generates a static contact angle with oil of at least about 30 degrees. Because wettability depends in part upon the surface tension of the reference liquid, a given surface may have a different wettability (and hence form a different contact angle) for different liquids.

The surface 12 comprises a material having a nominal liquid wettability sufficient to generate, with reference to an oil, a nominal contact angle of at least about 30 degrees.

For the purposes of understanding the invention, a "nominal contact angle" 34 (Figure 2) means the static contact angle 34 measured where a drop of a reference liquid 36 is disposed on a flat, smooth (< 1 nm surface roughness) surface 32 consisting essentially of the material. This nominal contact angle 34 is a measurement of the "nominal wettability" of the material. In one embodiment, the nominal contact angle, with reference to an oil, is at least about 50 degrees. In one embodiment, the nominal contact angle, with reference to an oil, is at least about 70 degrees. In one embodiment, the nominal contact angle, with reference to an oil, is at least about 100 degrees. In yet another embodiment, the nominal contact angle, with reference to an oil, is at least about 120 degrees.

Surface 12 (Figure 1) comprises at least one material selected from the group consisting of a ceramic, an intermetallic, and a polymer. Suitable ceramic materials include inorganic oxides, carbides, nitrides, borides, and combinations thereof. Non-limiting examples of such ceramic materials include aluminum nitride, boron nitride, chromium nitride, silicon carbide, tin oxide, titania, titanium carbonitride, titanium nitride, titanium oxynitride, stibinite ($SbS_2$), zirconia, hafnia, and combinations thereof. In certain embodiments, the surface comprises an intermetallic. Examples of suitable intermetallic materials include, but are not limited to, nickel aluminide, titanium aluminide, and combinations thereof. Polymer materials that may be used in surface 12 include, but are not limited to polytetrafluoroethylene, fluoroacrylate, fluoroeurathane, fluorosilicone, modified carbonate, silicones and combinations thereof. The material is selected based

EP 1 935 509 A1

on the desired contact angle, the fabrication technique used, and the end-use application of the article.

Surface 12 further comprises a texture comprising a plurality of features 16. The present inventors have found that by providing a surface 12, comprising a material of comparatively high nominal wettability, with a specific texture, as described in detail below, the resulting textured surface can have significantly lower wettability than that inherent to the material from which the surface is made. In particular, surface 12 has an effective wettability (that is, wettability of the textured surface) for the reference liquid sufficient to generate an effective contact angle greater than the nominal contact angle. In one embodiment, the effective contact angle is greater than the nominal contact angle by at least about 5 degrees. In another embodiment, the effective contact angle is greater than the nominal contact angle by at least about 10 degrees. In yet another embodiment, the effective contact angle is greater than the nominal contact angle by at least about 20 degrees. In another embodiment, the effective contact angle is greater than the nominal contact angle by at least about 30 degrees. The effective contact angle depends, in part, on the feature shape, dimensions, and spacings, as will be described in detail below.

As described above, surface 12 has a texture comprising a plurality of features 16. The plurality of features 16 may be of any shape, include at least one of depressions, protrusions, nanoporous solids, indentations, or the like. The features may include bumps, cones, rods, wires, channels, substantially spherical features, substantially cylindrical features, pyramidal features, prismatic structures, combinations thereof, and the like. Numerous varieties of feature shapes are suitable for use as features 16. In some embodiments, as shown in Figure 1, at least a subset of the plurality of features 16 protrudes above the surface 12 of the article. In some embodiments at least a subset of the plurality of features 16 is a plurality of cavities 18 disposed in the surface 12. In some embodiments, at least a subset of the features 16 has a shape selected from the group consisting of a cube, a rectangular prism, a cone, a cylinder, a pyramid, a trapezoidal prism, and a hemisphere or other spherical portion. These shapes are suitable whether the feature is a protrusion 16 or a cavity 18.

The size of features 16 (Figure 1) can be characterized in a number of ways. Features 16 comprise a height dimension (h) 20, which represents the height of protruding features above the surface 12 or, in the case of cavities 18, the depth to which the cavities extend into the surface 12. Features 16 further comprise a width dimension (a) 22. The precise nature of the width dimension will depend on the shape of the feature, but is defined to be the width of the feature at the point where the feature would naturally contact a drop of liquid placed on the surface of the article. The height and width parameters of features 16 have a significant effect on wetting behavior observed on surface 12.

Feature orientation is a further design consideration in the engineering of surface wettability in accordance with embodiments of the present invention. One significant aspect of feature orientation is the spacing of features. Referring to Figure 1, in some embodiments features 16 are disposed in a spaced-apart relationship characterized by a spacing dimension (b) 24. Spacing dimension 24 is defined as the distance between the edges of two nearest-neighbor features. Other aspects of orientation may also be considered, such as, for instance, the extent to which top 25 (or bottom 26 for a cavity) deviates from being parallel with surface 12, or the extent to which features 16 deviate from a perpendicular orientation with respect to the surface 12.

In some embodiments, all of the features 16 in the plurality have substantially the same respective values for h, a, and/or b ("an ordered array"), though this is not a general requirement. For example, the plurality of features 16 may be a collection of features, exhibiting a random distribution of size, shape, and/or orientation. In certain embodiments, moreover, the plurality of features is characterized by a multi-modal distribution (e.g., a bimodal or trimodal distribution) in h, a, b, or any combination thereof. Such distributions may advantageously provide reduced wettability in environments where a range of drop sizes is encountered. Estimation of the effects of h, a, and b on wettability are thus best performed by taking into account the distributive nature of these parameters. Techniques, such as Monte Carlo simulation, for performing analyses using variables representing probability distributions are well known in the art. Such techniques may be applied in designing features 16 for use in articles of the present invention. Accordingly, it will be understood that where the parameters a, b, h, and the like are described herein in the context of the plurality of features, rather than individual features, those parameters are to be construed as representing median values for the plurality of features taken as a population.

Many of the applications for low wettability surfaces, such as antifouling surfaces, for example, require not only a high contact angle for water, but also a reasonably high contact angle for oil, apart from a low level of friction and other contact forces between drop and surface to promote easy drop roll-off. The shape, dimensions, and the spacing of the features, along with the material composition of the surface, all influence the wettability of the surface. The inventors have discovered that it is possible to select the feature dimensions and spacings such that the effective contact angle for water and for oil is optimal to mitigate fouling of the surface.

The surfaces thus designed and fabricated have a selected wettability for water and oil to achieve antifouling characteristics. In one embodiment, the nominal contact angle, with reference to water, is at least about 100 degrees. In one embodiment, the nominal contact angle, with reference to water, is at least about 110 degrees. In one embodiment, the nominal contact angle, with reference to water, is at least about 120 degrees. In yet another embodiment, the nominal contact angle, with reference to water, is at least about 130 degrees. In certain embodiments, the nominal contact angle, with reference to water, is at least about 150 degrees.

The present inventors have developed a design methodology for creating surface textures having high contact angle (low wettability) for water and oil, and also easy drop roll-off. Through proper selection of b/a, and h/a, coupled with proper selection of materials based on the application environment, a surface can be designed such that drops of liquid impinging on the surface will exhibit hydrophobic and oil resistant properties combined with easy roll-off behavior. Accordingly, the features comprise a height dimension (h), a width dimension (a), and a spacing dimension (b) such that the ratio b/a is less than about 4, and ratio h/a is less than about 10.

Typically, parameter a is less than about 10 micrometers. In some embodiments, a is less than about 5 micrometers. In other embodiments, a is less than about 2 micrometers. In some embodiments, a in the range from about 100 nanometers to about 1 micrometer. In certain embodiments, b/a is in a range from about 0.3 to about 2. In certain other embodiments, b/a is in the range from about 0.5 to about 4. In certain embodiments, h/a is in a range from about 0.5 to about 5. In certain other embodiments, h/a is in the range from about 0.5 to about 1. In a particular embodiment, a is in the range from about 100 nanometers to about 1 micrometer; h is in the range from about 100 nanometers to about 2 micrometers; and b is in the range from about 200 nanometers to about 2 micrometers. In another embodiment, a is in the range from about 500 nanometers to about 1 micrometer, b/a is in a range from about 0.5 to about 4, and h/a is in a range from about 0.5 to about 1. In particular embodiments, especially where aerodynamic drag is an important concern, as in turbomachinery components, for instance, the surface has an average roughness of less than about 1.6 micrometers, such as less than about 0.8 micrometers. (Average roughness is the arithmetic average of the absolute values of the roughness profile ordinates).

The plurality of features 16 (Figure 1) making up texture 13 need not be confined to the surface 12 or a region immediately proximate to the surface 12. In some embodiments, article 10 further comprises a bulk portion 11 disposed beneath surface 12, and the plurality of features 16 extends into bulk portion 11. Distributing features 16 throughout the article 10, including at the surface 12 and within the bulk portion 11, allows surface 12 to be regenerated as the top layer of surface erodes away.

In certain embodiments, the surface comprises a surface energy modification layer (not shown). In certain cases, the surface energy modification layer comprises a coating disposed over a substrate. The substrate may comprise at least one of a metal, an alloy, a plastic, a ceramic, or any combination thereof. The substrate may take the form of a film, a sheet, or a bulk shape. The substrate may represent article 10 in its final form, such as a finished part; a near-net shape; or a preform that will be later made into article 10. Surface 12 may be an integral part of the substrate. For example, surface 12 may be formed by replicating a texture directly onto the substrate, or by embossing the texture onto the substrate, or by any other such method known in the art of forming or imparting a predetermined surface texture onto a substrate surface. Alternatively, surface 12 may comprise a layer that is disposed or deposited onto the substrate by any number of techniques that are known in the art.

The coating comprises at least one material selected from the group consisting of a hydrophobic hard coat, a fluorinated material, a polymeric material, a composite material, and various combinations thereof. Examples of suitable hydrophobic hardcoat includes, but are not limited to, diamond-like carbon (DLC)--including fluorinated DLC, tantalum oxide, titanium carbide, titanium nitride, chromium nitride, boron nitride, chromium carbide, molybdenum carbide, titanium carbonitride, boron nitride, and zirconium nitride. As used herein, "hydrophobic hardcoatings" refers to a class of coatings that have hardness in excess of that observed for metals, and exhibit wettability resistance sufficient to generate, with a drop of water, a nominal static contact angle of at least about 70 degrees. As a non-limiting example, fluorinated DLC coatings have shown significant resistance to wetting by water. Other hardcoatings such as nitrides, borides, carbides, and oxides, may also serve this purpose. These hardcoatings, and methods for applying them, such as chemical vapor deposition (CVD), physical vapor deposition (PVD), etc., are known in the art, and may be of particular use in harsh environments.

Fluorinated materials, such as fluorosilanes, are also suitable coating materials that exhibit low wettability for oil and water. If conditions allow, the coating may comprise a polymeric material, such as those given above as examples for use in surface 12. Further examples of polymeric materials known to have advantageous resistance to wetting by certain liquids include silicones, fluoropolymers, urethanes, acrylates, epoxies, polysilazanes, aliphatic hydrocarbons, polyimides, polycarbonates, polyether imides, polystyrenes, polyolefins, polypropylenes, polyethylenes or mixtures thereof.

Alternatively, the surface modification layer may be formed by diffusing or implanting molecular, atomic, or ionic species into the surface to form a layer of material having altered surface properties compared to material underneath the surface modification layer. In one embodiment, the surface modification layer comprises ion-implanted material, for example, ion-implanted metal.

Articles with controlled wettability for water and for oil are attractive for many applications. The advantages of such surfaces could be utilized in making surfaces that are antifouling, self-cleaning, or easy-cleaning surfaces. Examples of potential applications of embodiments of the present invention include laboratory vessels, vehicular surfaces, out door furniture, household goods, electrical devices, stadium roofs, tiles, windshields, medical devices, marine vessels, auto, aero or other body panels, easy-to-clean walls and countertops. Biotechnological applications include membrane separation, anti-bacterial surfaces, micro-fluidic channels, stents, etc.

Other exemplary articles include, but are not limited to, airfoils or hydrofoils, pipes and tubing for liquid transport or protein separation columns.

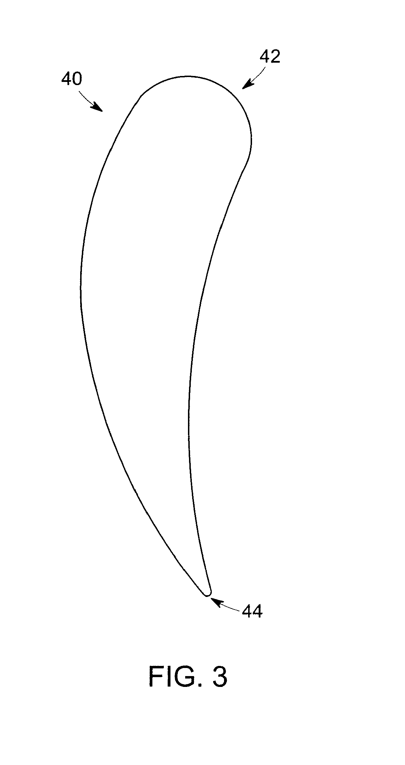

Another embodiment of the invention comprises a component of a turbine assembly. The turbine assembly is selected from the group consisting of a wind turbine, a gas turbine, and a steam turbine. The component comprises at least one selected from the group consisting of a compressor, a fan, a combustor, and a heat exchanger. A suitable example of such a component, as has been stated above, is a component comprising an airfoil; rotating blades and stationary components (vanes or nozzles) are examples. As shown in Figure 3, an airfoil 40 (shown in cross-section) typically comprises a leading edge 42 and a trailing edge 44 relative to the expected directional flow of fluid. The turbine component comprises a surface. The surface comprises a material having a nominal liquid wettability sufficient to generate, with reference to an oil, a nominal contact angle of at least about 30 degrees; and a texture comprising a plurality of features disposed on the surface. The features have a size, shape, and orientation selected such that the surface has an effective wettability sufficient to generate, with reference to an oil, an effective contact angle of greater than the nominal contact angle and an average roughness less than about 0.8 micrometers. The surface material and texture are selected to achieve the desired wettability for water and oil as discussed in detail above. The resultant surface is resistant to fouling by light turbine oil or other similar synthetic oils with or without surfactants. This in turn will reduce the adhesion of fouling agent leading to a reduced rate of fouling. In some embodiments, features (not shown) are disposed over the entire surface of an airfoil 40. However, in certain cases features may be necessary or desired only at a particular portion or portions of airfoil 40, such as leading edge 42 and/or trailing edge 44.

The nature of the application will determine the extent to which features are to be disposed on an article. The fouling results in degradation in the compressor efficiency as well as crevice corrosion cracking leading to lower life. Currently utilities use off-line compressor washes, which result in significant down time. The antifouling properties of the articles disclosed herein will in turn improve the robustness of the performance, increase the life of the airfoils and reduce downtime. Hydrophobicity of the surfaces may also result in water droplets rolling of the surface. As a result, the water wash treatment efficiency may be improved.

Another aspect of the invention comprises a method to render the surface of an article antifouling. The method comprises: providing an article comprising a substrate; disposing a plurality of features on the substrate to form a surface, such that fouling of the surface is reduced. The substrate comprises a material having a nominal liquid wettability sufficient to generate, with reference to an oil, a nominal contact angle. The features have a size, shape, and orientation selected such that the surface has an effective wettability sufficient to generate, with reference to an oil, an effective contact angle of greater than the nominal contact angle. The features comprise a height dimension (h), a width dimension (a), a spacing dimension (b) such that ratio b/a is less than about 4, ratio h/a is less than about 10; and an average roughness less than about 1.6 micrometers. The surface has an effective contact angle, with reference to an oil, greater than about 30 degrees.

The features are disposed on the substrate to form a surface. The features may be disposed onto the substrate by any texturing methods known in the art. Examples of some suitable methods include, lithography, soft lithography, embossing, forming, etching, template growth, film deposition, laser drilling, sand blasting, thermal spray, electrochemical etching, and the like. The features may comprise the same material as the substrate or another material. The exact choice of the substrate and feature materials, and feature size and spacing depends, in part, on the desired wettability of the surface, as discussed above. Typically, the surface has the effective contact angle, with reference to an oil, greater than about 30 degrees. In some embodiments, the surface has the effective contact angle, with reference to an oil, greater than about 50 degrees. In other embodiments, the surface has the effective contact angle, with reference to an oil, greater than about 100 degrees.

The aforementioned embodiments present clear advantages over existing antifouling surfaces and turbine components comprising such surfaces. For example, it is expected that the turbine components comprising the foregoing surfaces offer increased life of the airfoils and reduce downtime. In addition, these surfaces may improve the efficiency of water wash treatment. Most of the conventionally known antifouling surfaces are based on polymeric coatings. Though, many of the reports on superhydrophobic/hydrophobic surfaces have generally talked about potential for oil resistance, there is no systematic study on the design space for achieving textures which have selected hydrophobicity and oil resistance in combination to achieve antifouling properties.

The following example serves to illustrate the features and advantages offered by the embodiments of the present invention, and are not intended to limit the invention thereto.

Example -Making silicon articles with antifouling properties:

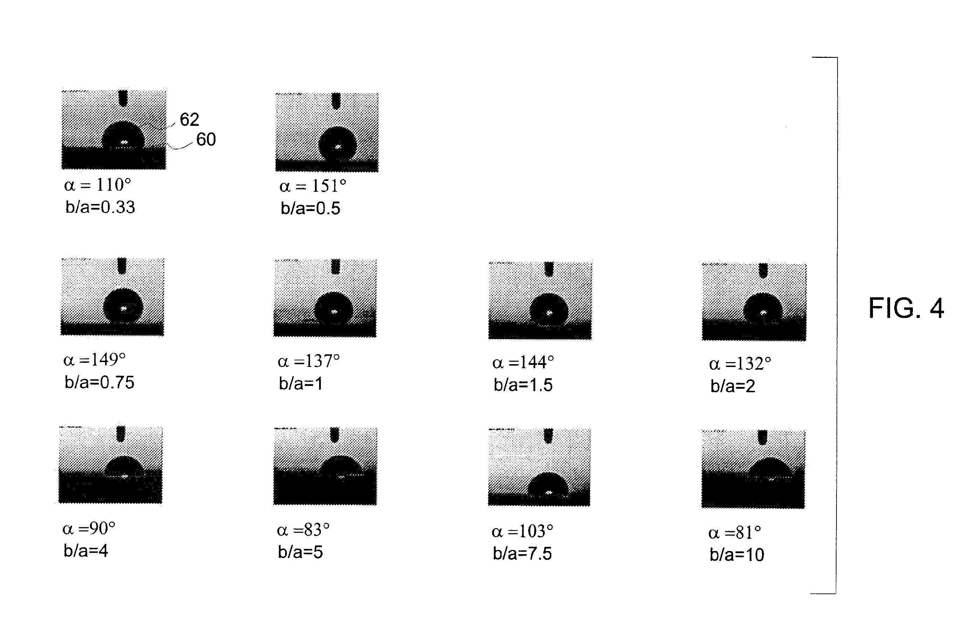

Silicon substrates were provided via lithography with right rectangular prism features about 3 micrometers in width (a) and having various b/a ratios. The substrates were then placed in a chamber with a vial of liquid fluorosilane, and the chamber was evacuated to allow the liquid to evaporate and condense from the gas phase onto the silicon substrate, thereby creating a hydrophobic film on the surface. The contact angle was recorded as a function of b/a ratio. Figure 4 shows the photographs of oil droplets 62 on silicon posts 60 with different b/a ratios. The figure lists static contact angle of oil (a light turbine oil in this case) on different textures. The ease of roll-off was measured by determining the angle of tilt from the horizontal needed before a drop will roll off of a surface. A drop that requires a near vertical tilt is highly pinned to the surface, whereas a drop exhibiting easy roll-off will require very little tilt angle to roll off the surface. In some embodiments, the drop will roll off of the surface at the point where the force of gravity pulling on the drop equals the force pinning the drop to the surface. This situation can be represented by the following expression:

$$\rho V g \sin \alpha = 2\pi\mu\beta r \ (1);$$

where $\rho$ is the liquid density, V is the volume of the drop, g is the gravity constant, $\alpha$ is the angle of inclination from the horizontal, $\mu$ is the pinning parameter, $\beta$ is the fraction of the contact line that is pinned, and r is the radius of the contact area of the drop with the substrate. $\mu$, the pinning parameter, is a material constant that is independent of the surface texture, but $\beta$ and r are functions of the texture. The texture, in some embodiments, is represented by the parameters a, b, and h of the features. Based on the oil roll-off on smooth silicon with fluorosialne, the pinning parameter, $\mu$ was calculated to be 0.029 N/m. For water, the pinning parameter is of the order of 0.013 N/m. This will dictate a different texture design for oil resistant surfaces as compared to mere hydrophobic surfaces. Table 1 lists the contact angles for different b/a ratios.

TABLE 1. Contact angles for different b/a ratios.

| Sample | a (micrometers) | b/a | Contact angle (with reference to oil) |
|--------|-----------------|------|---------------------------------------|
| 1 | 3 | 0.33 | 110 |
| 2 | 3 | 0.5 | 151 |
| 3 | 3 | 0.75 | 149 |
| 4 | 3 | 1 | 137 |
| 5 | 3 | 1.5 | 144 |
| 6 | 3 | 2 | 132 |
| 7 | 3 | 4 | 90 |
| 8 | 3 | 5 | 83 |
| 9 | 3 | 7.5 | 103 |
| 10 | 3 | 10 | 81 |

Table 1 shows the effect of varying b/a on the contact angle. The contact angle measured on a control specimen having a smooth (non-textured) surface coated with fluorosilane was about 88 degrees. From Table 1, it is apparent that b/a < 4 provides with a design space for antifouling textures. Above b/a of 4, the contact angle decreases as the drop settles into a wetting state under its own weight.

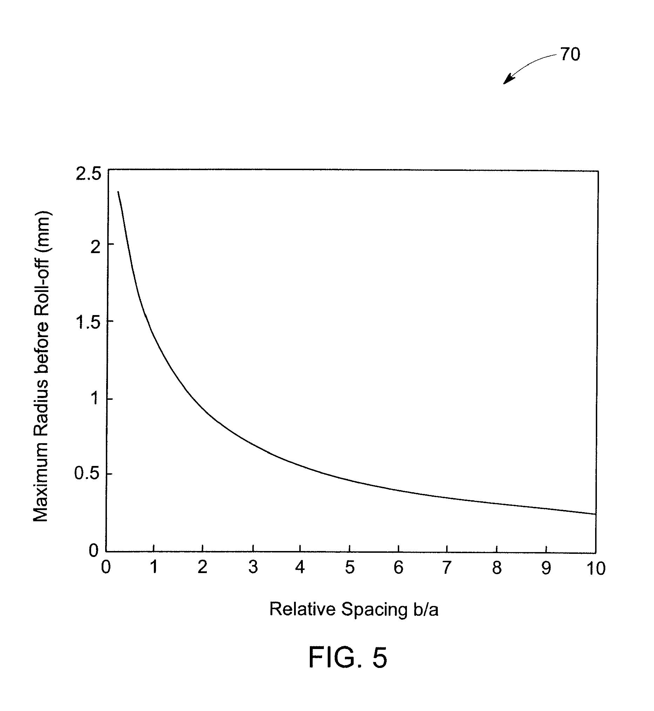

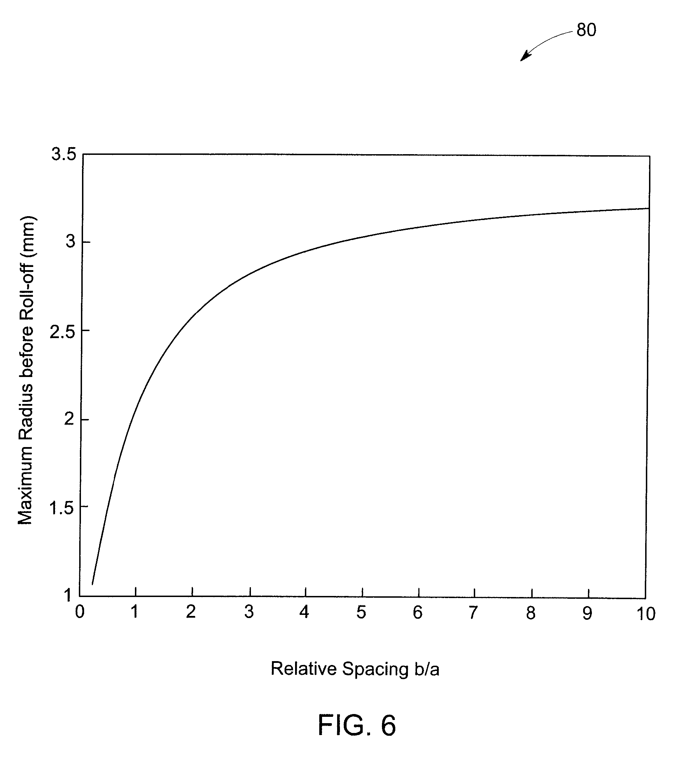

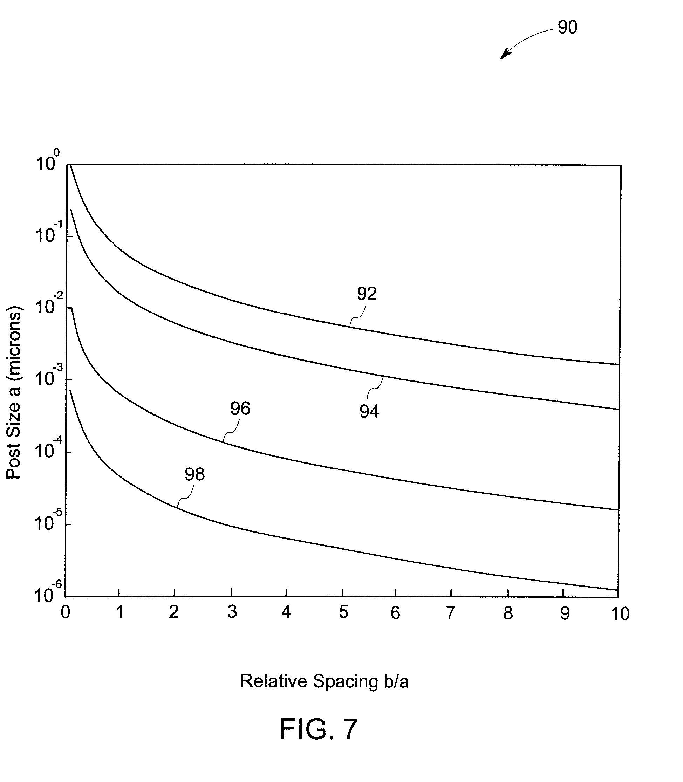

As a practical matter, design considerations are applied to arrive at a surface design that promotes a high contact angle and easy drop roll-off. Figures 5-7 show the results of work aimed at validating the above analysis, and the plots illustrated in these figures may be used to select suitable textures for a range of applications, for a given combination of oil type and surface material. Figure 5 shows the plot 70 of maximum diameter of the drop required for the drop to roll off of a texture comprised of posts described above. Figure 6 gives plot 80, the maximum diameter of the drop required for the drop to roll off on a texture comprised of pore structures. Figure 7 shows plot 90, the design space (feature sizes vs. b/a) for texture design for applications involving impacting oil droplets. Curves 92, 94, 96, and 98 correspond to design space for oil droplets impacting at velocities of 5 m/s, 10 m/s, 50 m/s and 180 m/s respectively.

While various embodiments are described herein, it will be appreciated from the specification that various combinations of elements, variations, equivalents, or improvements therein may be made by those skilled in the art, and are still within the scope of the invention. It should be understood that though the above embodiments are discussed with respect to a turbine component, the embodiments of the invention may be utilized in any other component, in which the antifouling property of the surface are essentially beneficial.

**Claims**

1. An article (10) comprising:

   a surface (12), wherein the surface (12) comprises:

   a material having a nominal liquid wettability sufficient to generate, with reference to an oil, a nominal contact angle of at least about 30 degrees; and
   a texture comprising a plurality of features (16) disposed on the surface (12);

   wherein the features (16) have a size, shape, and orientation selected such that the surface (12) has an effective wettability sufficient to generate, with reference to an oil, an effective contact angle greater than the nominal contact angle;
   wherein the features (16) comprise a height dimension (20) (h), a width dimension (22) (a), and a spacing dimension (b) such that
   ratio b/a is less than about 4, and
   ratio h/a is less than about 10.

2. The article (10) of claim 1, wherein the surface (12) has an effective wettability sufficient to generate, with reference to water, an effective contact angle of at least about 110 degrees.

3. The article (10) of claim 1 or claim 2, wherein a is less than about 10 micrometers.

4. The article (10) of any preceding claim, wherein the effective contact angle is greater than the nominal contact angle by at least about 5 degrees.

5. The article (10) of any preceding claim, wherein the surface (12) has an average roughness of less than about 0.8 micrometers.

6. The article (10) of any preceding claim, wherein at least a subset of the plurality of features (16) protrude above the surface (12) of the article (10).

7. The article (10) of any preceding claim, wherein at least a subset of the plurality of features (16) is a plurality of cavities disposed on the surface.

8. The article (10) of any preceding claim, wherein the features (16) comprise at least one material selected from the group consisting of a ceramic, an intermetallic compound, and a polymer.

9. The article (10) of any preceding claim, wherein the surface (12) comprises a surface energy modification layer.

10. The article (10) of any preceding claim, wherein the surface (12) is resistant to fouling by an element selected from the group consisting of bearing oil, light turbine oil, and synthetic oil.

11. The article (10) of any preceding claim, wherein the article (10) comprises a component of a turbine assembly.

12. A method to render surface (12) of an article (10) antifouling, the method comprising:

    providing an article (10) comprising a substrate, wherein the substrate comprises a material having a nominal liquid wettability sufficient to generate, with reference to an oil, a nominal contact angle;
    disposing a plurality of features (16) on the substrate to form a surface, wherein the features (16) have a size, shape, and orientation selected such that the surface (12) has an effective wettability sufficient to generate, with reference to an oil, an effective contact angle of greater than the nominal contact angle; wherein the features (16) comprise a height dimension (20) (h), a width dimension (22) (a), a spacing dimension (b) such that
    ratio b/a is less than 4, ratio h/a is less than about 10; and an average roughness less than about 0.8 micrometers;

    wherein the surface (12) has a liquid wettability sufficient to generate, with reference to an oil, a effective contact angle of greater than about 30 degrees; such that fouling of the surface (12) is reduced.

FIG. 1

FIG. 2

FIG. 3

α = 110°
b/a=0.33

α = 151°
b/a=0.5

α =149°
b/a=0.75

α =137°
b/a=1

α =144°
b/a=1.5

α =132°
b/a=2

α =90°
b/a=4

α =83°
b/a=5

α =103°
b/a=7.5

α =81°
b/a=10

FIG. 4

EP 1 935 509 A1

FIG. 5

FIG. 6

FIG. 7

**European Patent Office**

**EUROPEAN SEARCH REPORT**

Application Number

EP 07 12 2213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 1 844 863 A (GEN ELECTRIC [US]) 17 October 2007 (2007-10-17) * abstract * * column 4, line 43 - line 52 * * column 10, paragraph 36 * * column 10, paragraph 38 - column 11 * * claims 1,6,10-12 * ----- | 1-12 | INV. B05D5/08 B05D3/12 F28F13/18 |
| X | US 6 649 266 B1 (GROSS FRANK [DE] ET AL) 18 November 2003 (2003-11-18) * abstract * * column 2, line 46 - line 50; figure 1 * * column 7 - column 9; examples 1-3 * * claims 1,7,8 * ----- | 1-9,12 | |
| X | US 2002/150724 A1 (NUN EDWIN [DE] ET AL) 17 October 2002 (2002-10-17) * abstract * * page 2, paragraph 20 - paragraph 22 * * claims 1,4,5 * * page 4, paragraph 49 * ----- | 1-9 | TECHNICAL FIELDS SEARCHED (IPC) |
| X | US 6 743 467 B1 (JONES ASHLEY [AU] ET AL) 1 June 2004 (2004-06-01) * claims 1,38-40 * * column 5, line 4 - line 6 * * column 5, line 12 - line 32 * ----- | 1-12 | B05D F28F |

The present search report has been drawn up for all claims

| Place of search | Date of completion of the search | Examiner |
|---|---|---|
| Munich | 23 April 2008 | Mill, Sibel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

### ANNEX TO THE EUROPEAN SEARCH REPORT
### ON EUROPEAN PATENT APPLICATION NO.

EP 07 12 2213

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2008

| Patent document cited in search report | | Publication date | Patent family member(s) | | Publication date |
|---|---|---|---|---|---|
| EP 1844863 | A | 17-10-2007 | NONE | | |
| US 6649266 | B1 | 18-11-2003 | AT | 255959 T | 15-12-2003 |
| | | | DE | 19917366 A1 | 19-10-2000 |
| | | | WO | 0062942 A2 | 26-10-2000 |
| | | | EP | 1183107 A2 | 06-03-2002 |
| | | | JP | 2002542021 T | 10-12-2002 |
| US 2002150724 | A1 | 17-10-2002 | AT | 340654 T | 15-10-2006 |
| | | | CA | 2381134 A1 | 12-10-2002 |
| | | | DE | 10118352 A1 | 17-10-2002 |
| | | | EP | 1249280 A2 | 16-10-2002 |
| | | | ES | 2271131 T3 | 16-04-2007 |
| | | | JP | 2002346469 A | 03-12-2002 |
| US 6743467 | B1 | 01-06-2004 | AT | 344308 T | 15-11-2006 |
| | | | WO | 0114497 A1 | 01-03-2001 |
| | | | CA | 2383234 A1 | 01-03-2001 |
| | | | CN | 1378581 A | 06-11-2002 |
| | | | EP | 1210396 A1 | 05-06-2002 |
| | | | HK | 1047599 A1 | 16-09-2005 |
| | | | JP | 2003507567 T | 25-02-2003 |
| | | | NZ | 517308 A | 26-07-2002 |

EPO FORM P0459

For more details about this annex : see Official Journal of the European Patent Office, No. 12/82